# EUROPEAN PATENT APPLICATION

(11) **EP 3 667 515 A1**
(43) Date of publication of application: **17.06.2020**
(21) Application number: 17923813.4
(22) Date of filing: 31.08.2017
(51) Int. Cl.: G06F 16/33

(54) **APPLICATION RESOURCE PROCESSING METHOD AND RELATED PRODUCT**

(71) Applicant: SHENZHEN HEYTAP TECHNOLOGY CORP., LTD., Shenzhen, Guangdong 518057 (CN)
(72) Inventor: LUO, Yue, Shenzhen Guangdong 518057 (CN)
(74) Representative: Manitz Finsterwald Patent- und Rechtsanwaltspartnerschaft mbB
(86) International application number: PCT/CN2017/100091
(87) International publication number: WO 2019/041288

(57) **Abstract**

A method for downloading application resources and related products are provided. The method includes the following. An application server receives an application resource search request carrying a first search term from a mobile terminal (S201). The application server determines a search result for the first search term and a synonym list for the first search term, and sends the search result for the first search term to the mobile terminal (S202). The application server receives an application resource search request carrying a second search term from the mobile terminal (S203). The application server determines whether the second search term is a synonym of the first search term according to the synonym list (S204). The application server determines the search result for the first search term as a search result for the second search term and sends the search result for the second search term to the mobile terminal, based on a determination that the second search term is a synonym of the first search term (S205). It is possible to improve richness and accuracy of the search result regarding application resources.

## Description

### TECHNICAL FIELD

This disclosure relates to the technical field of mobile terminals, and particularly to a method for processing application resources and related products.

### BACKGROUND

With the rapid development of microelectronic technology, terminal devices such as mobile phones and servers will store and be installed with more and more applications, such as reading applications, payment applications, gaming applications, music applications. People's lives are inseparable from mobile phones.

### SUMMARY

Implementations of the disclosure provide a method for processing application resources and related products, to improve richness and accuracy of a search result regarding application resources.

According to a first aspect, implementations provide a method for processing application resources. The method is applicable to an application server. The application server is configured to push the application resources to a mobile terminal. The method includes the following.

An application resource search request carrying a first search term is received from the mobile terminal. A search result for the first search term and a synonym list for the first search term are determined, and the search result for the first search term is sent to the mobile terminal. An application resource search request carrying a second search term is received from the mobile terminal. Determine whether the second search term is a synonym of the first search term according to the synonym list. The search result for the first search term is determined as a search result for the second search term and the search result for the second search term is sent to the mobile terminal, based on a determination that the second search term is a synonym of the first search term.

According to a second aspect, implementations provide a method for processing application resources. The method is applicable to a mobile terminal. The method includes the following.

An application resource search request carrying a first search term is sent, where the application resource search request carrying the first search term is used for an application server to determine a search result for the first search term and a synonym list for the first search term and send the search result for the first search term to the mobile terminal. The search result for the first search term is received. An application resource search request carrying a second search term is sent, where the application resource search request carrying the second search term is used for the application server to determine the search result for the first search term as a search result for the second search term and send the search result for the second search term to the mobile terminal when the second search term is determined to be a synonym of the first search term according to the synonym list. The search result for the second search term is received.

According to a third aspect, implementations provide an application server. The application server includes a receiving unit, a determining unit, a detecting unit, and a sending unit.

The receiving unit is configured to receive, from a mobile terminal, an application resource search request carrying a first search term and an application resource search request carrying a second search term. The determining unit is configured to determine a search result for the first search term and a synonym list for the first search term, and send the search result for the first search term to the mobile terminal. The detecting unit is configured to determine whether the second search term is a synonym of the first search term according to the synonym list. The sending unit is configured to determine the search result for the first search term as a search result for the second search term and send the search result for the second search term to the mobile terminal when the second search term is a synonym of the first search term.

According to a fourth aspect, implementations provide a mobile terminal. The mobile terminal includes a sending unit and a receiving unit.

The sending unit is configured to: send an application resource search request carrying a first search term, where the application resource search request carrying the first search term is used for an application server to determine a search result for the first search term and a synonym list for the first search term and send the search result for the first search term to the mobile terminal, and send an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list. The receiving unit is configured to receive the search result for the first search term, and receive the search result for the second search term.

According to a fifth aspect, implementations provide a system for processing application resources. The system includes the application server of the third aspect and the mobile terminal of the fourth aspect of the implementations.

According to a sixth aspect, implementations provide an application server. The application server includes a processor and a memory configured to store one or more programs. The one or more programs are configured to be executed by the processor and include instructions configured to perform operations of the method of the first aspect of the implementations.

According to a seventh aspect, implementations provide a mobile terminal. The mobile terminal includes a processor and a memory configured to store one or more programs. The one or more programs are configured to be executed by the processor and include instructions configured to perform operations of the method of the second aspect of the implementations.

According to an eighth aspect, implementations provide a computer readable storage medium. The computer readable storage medium is configured to store computer programs for electronic data interchange. The computer programs are operable with a computer to perform all or part of operations of the method of the first aspect or the second aspect of the implementations. The computer includes a mobile terminal.

According to a ninth aspect, implementations provide a computer program product. The computer program product includes a non-transitory computer readable storage medium configured to store computer programs. The computer programs are operable with a computer to perform all or part of operations of the method of the first aspect or the second aspect of the implementations. The computer program product may be a software installation package.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. It is possible to improve richness and accuracy of the search result regarding application resources.

### BRIEF DESCRIPTION OF THE DRAWINGS

The following briefly introduces accompanying drawings required for illustrating implementations.
FIG. 1 is a system architecture diagram illustrating a system for processing application resources according to implementations.
FIG. 2 is a schematic flow chart illustrating a method for processing application resources according to implementations.
FIG. 3 is a schematic flow chart illustrating a method for processing application resources according to other implementations.
FIG. 4A is a schematic flow chart illustrating a method for processing application resources according to other implementations.
FIG. 4B is a schematic diagram illustrating a search result for a first search term according to implementations.
FIG. 4C is a schematic diagram illustrating a search result for a second search term according to implementations.
FIG. 5 is a schematic structural diagram illustrating an application server according to implementations.
FIG. 6 is a schematic structural diagram illustrating a mobile terminal according to implementations.
FIG. 7 is a block diagram illustrating functional units of an application server according to implementations.
FIG. 8 is a block diagram illustrating functional units of a mobile terminal according to implementations.
FIG. 9 is a schematic structural diagram illustrating a smart phone according to implementations.
FIG. 10 is a system architecture diagram illustrating a system for processing application resources according to implementations.

### DETAILED DESCRIPTION

In order for those skilled in the art to better understand technical solutions of the present disclosure, in the following, technical solutions of implementations of the present disclosure will be described clearly and completely with reference to accompanying drawings in implementations of the present disclosure. Apparently, implementations described hereinafter are merely some implementations, rather than all implementations, of the present disclosure. All other implementations obtained by those of ordinary skilled in the art based on implementations of the present disclosure without creative efforts shall fall within the protection scope of the present disclosure.

The terms "first", "second", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion. For example, a process, method, system, product, or apparatus including a series of steps or units is not limited to the listed steps or units. Instead, it can optionally include other steps or units that are not listed; alternatively, other steps or units inherent to the process, method, product, or apparatus can also be included.

The term "implementation" referred to herein means that a particular feature, structure, or character described in conjunction with the implementation may be contained in at least one implementation of the present disclosure. The phrase appearing in various places in the specification does not necessarily refer to the same implementation, nor does it refer to an independent or alternative implementation that is mutually exclusive with other implementations. It is explicitly and implicitly understood by those skilled in the art that an implementation described herein may be combined with other implementations.

A mobile terminal in implementations of the disclosure may include various handheld devices, in-vehicle devices, wearable devices, computing devices that have wireless communication functions or other processing devices connected to the wireless modem, as well as various forms of user equipment (UE), mobile stations (MS), terminal devices, and the like. For the convenience of description, the above-mentioned devices are collectively referred to as the mobile terminal. An operating system of the implementations is a software system that uniformly manages hardware resources and provides service interfaces to users.

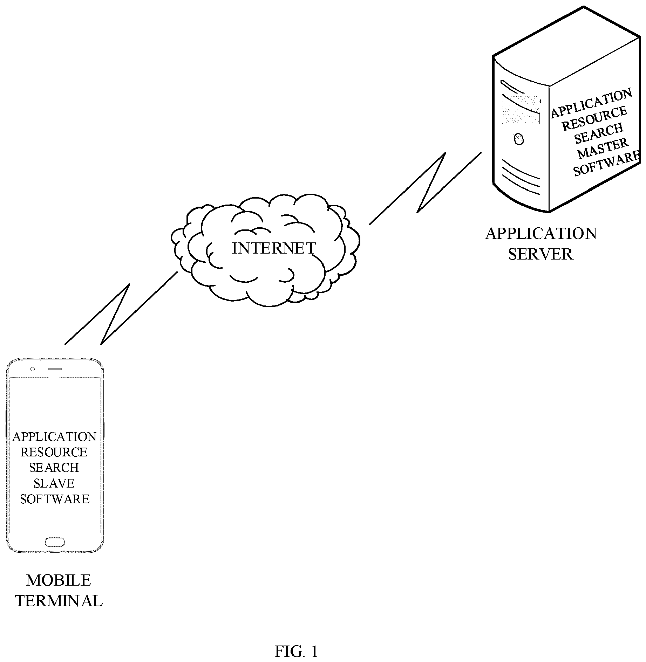

FIG. 1 is a system architecture diagram illustrating a system for processing application resources according to implementations. The system includes an application server and a mobile terminal. The application server can establish a communication connection with the mobile terminal through a communication network (such as various types of wireless mobile communication networks). The application server runs application resource search master software, and the application resource search master software is configured to provide application resource search and push services. The mobile terminal runs application resource search slave software, and the application resource search slave software is configured to provide a user interaction interface for users to search for application resources and to output a search result for the users to view. For names and forms of the above application resource search master software and slave software, the implementations are not limited.

The implementations are described below with reference to the drawings.

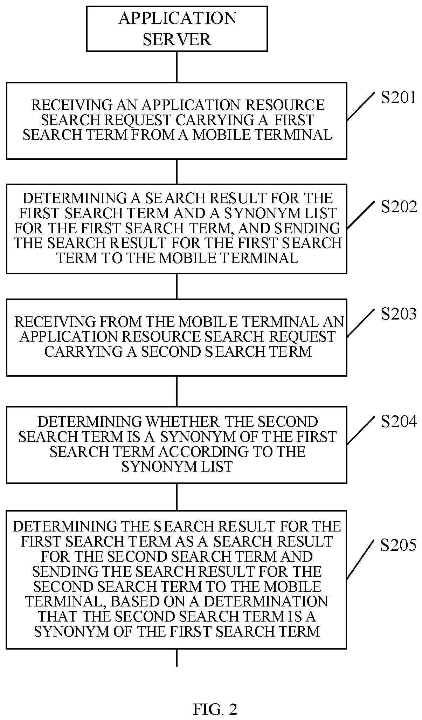

FIG. 2 is a schematic flow chart illustrating a method for processing application resources according to implementations. The method is applicable to an application server. The method begins at S201.

At S201, the application server receives an application resource search request carrying a first search term from a mobile terminal.

The application server receives the application resource search request (i.e., a search request for an application resource) from the mobile terminal, and the search request is carried with the first search term. The first search term is a name of an application corresponding to the application resource.

Applications corresponding to the first search term can include but not limited to game applications (glory of kings®, World of Warcraft®, etc.), social applications (WeChat®, QQ®, Weibo®, etc.), office applications (word, PPT, excel, etc.), video applications (Iqiyi®, Tencent video®, etc.), audio applications (Netease cloud music®, QQ music®, etc.), payment applications (Alipay®, Apple Pay®, etc.), etc.

At S202, the application server determines a search result for the first search term and a synonym list for the first search term, and sends the search result for the first search term to the mobile terminal.

The application server pre-stores the synonym list for the first search term. According to the first search term, the synonym list and the search result corresponding to the first search term can be determined. The search result for the first search term is application resources corresponding to synonyms in the synonym list.

If there is no synonym list corresponding to the first search term in the application server, a general search method can be applied to determine the search result for the first search term.

At S203, the application server receives from the mobile terminal an application resource search request carrying a second search term.

After the first search is completed, the application server performs a second search when the second search term is received from the mobile terminal, here, a search record for the first search term and the search result for the first search term remain being saved in the application server.

At S204, the application server determines whether the second search term is a synonym of the first search term according to the synonym list.

When searching with the second search term (i.e., performing the second search), the application server will first determine whether the second search term is a term in the synonym list for the first search term, that is, determine whether the second search term is a synonym of the first search term.

At S205, the application server determines the search result for the first search term as a search result for the second search term and sends the search result for the second search term to the mobile terminal, based on a determination that the second search term is a synonym of the first search term.

When the second search term is a synonym of the first search term, that is, when a synonym list for the second search term is the same as the synonym list for the first search term as well as the first search term is a term in the synonym list and the second search term is a term in the synonym list, the search result for the second search term is determined the same as the search result for the first search term, which means that both the search result for the second search term and the search result for the first search term are the same and are the application resources corresponding to the synonyms in the synonym list.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is beneficial to improving the real-time and accuracy of push of the search result on application resources.

In at least one implementation, the search result for the first search term is determined as follows. Query for at least one application resource from an application resource library, where a matching degree between a name of each of the at least one application resource and the first search term is greater than a preset matching degree. A push sequence for the at least one application resource is generated. The push sequence is determined as the search result for the first search term.

The application server can determine the at least one application resource in the application resource library according to the first search term, generate the push sequence according to the at least one application resource, and determine the push sequence to be the search result for the first search term, where the matching degree between the name of each of the at least one application resource and the first search term is greater than the preset matching degree.

For example, if the first search term is "big shots show" and an application whose name contains *n* (*n*>=*2*) same words as the first search term is determined as an application resource with a matching degree greater than the preset matching degree, the application server can determine, from the application resource library, application resources whose names each contain *n* (*n*>=*2*) words the same as the term "big shots show". For example, the above application resources are little shots show, shots show, and uniform shots show, in which a matching degree between a name of each of shots show, shots show, and uniform shots show and the big shots show is greater than the preset matching degree. A push sequence including the above applications can be generated, where the push sequence includes terms such as big shots show, shots show, shots show, and uniform shots show, etc., and the push sequence is used as the search result for the first search term.

According to the above, the application server can determine the at least one application resource having the matching degree with the first search term greater than the preset matching degree to be the search result for the first search term, that is, the name of each of the at least one application resource is strongly related to the first search term, which is beneficial to improving the accuracy and richness of the search result for the first search term.

In at least one implementation, the push sequence includes resource information and a display order of the at least one application resource, and the resource information at least includes a name, a size, the number of installations (i.e., the number of times of installations), and popularity of the at least one application resource.

According to this implementation, the push sequence can include the name, the size, the number of installations, and the popularity of the at least one application resource, which is helpful to understand detailed information of the search result and improve the accuracy and reliability of the search result.

In at least one implementation, the synonym list for the first search term is determined as follows. Query a pre-stored synonym library by using the first search term as a query identity, and determine a synonym list containing the first search term as the synonym list for the first search term. Alternatively, query for search terms from the pre-stored synonym library and establish the synonym list for the first search term according to the search terms, where for each of the search terms, a name thereof has *n* same words as the first search term, and *n* is greater than or equal to a preset threshold.

The synonym list corresponding to the first search term is determined by querying a mapping between search terms and synonyms lists. The synonym list corresponding to the first search term includes the first search term.

The search result for the first search term can be a sequence of multiple synonyms in the synonym list. The search result for the second search term can also be the sequence of the multiple synonyms in the synonym list. The search result for the first search term is the same as the search result for the second search term, where the wording "same" used herein means that, for the search result for the first search term and the search result for the second search term, application resources of the sequence are the same while the display order of the application resources are different. For example, application resources corresponding to the first search term are displayed first in the search result for the first search term, and application resources corresponding to the second search term are displayed first in the search result for the second search term.

According to the above, after establishing synonym lists for first search terms, the application server establishes a mapping between the search terms and the synonym lists. It is possible to determine the synonym list corresponding to the first search term by using a simple search algorithm.

In at least one implementation, the following is further conducted. Determine whether a name of a new application resource is a synonym of the first search term when the new application resource is added to an application resource library. The name of the new application resource is added to the synonym list based on a determination that the name of the new application resource is a synonym of the first search term.

As new application resources will arrive at the application resource library, after the application resource library is updated, the synonym list also needs to be updated synchronously. When the new application resource is added, determine whether the name of the new application resource is a synonym of the first search term, that is, determine whether the number of same words in the name of the new application resource and the first search term is greater than a preset threshold. If yes, the name of the new application resource is added to the synonym list.

According to this implementation, the application server determines whether the name of the new application resource is a synonym of the first search term when the new application resource is added to the application resource library. If so, the name of the new application resource is added to the synonym list, so as to update the synonym list. In this way, richness and accuracy of the search result can be improved.

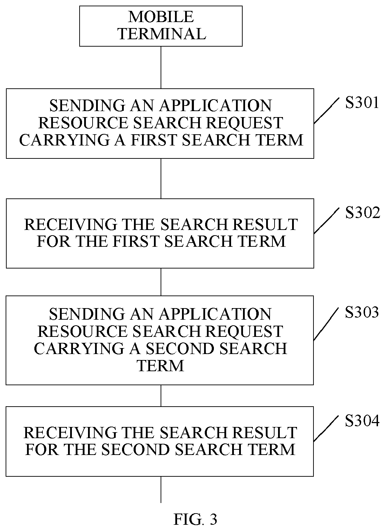

In accordance with the implementations of FIG. 2, FIG. 3 is a schematic flow chart illustrating a method for processing application resources according to other implementations. The method is applicable to a mobile terminal. The method begins at S301.

At S301, the mobile terminal sends an application resource search request carrying a first search term, where the application resource search request carrying the first search term is used for an application server to determine a search result for the first search term and a synonym list for the first search term and send the search result for the first search term to the mobile terminal.

At S302, the mobile terminal receives the search result for the first search term.

At S303, the mobile terminal sends an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list.

At S304, the mobile terminal receives the search result for the second search term.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of push of the search result for application resources.

In at least one implementation, after the mobile terminal receives the search result for the first search term, the following is further conducted. The search result for the first search term is displayed in a search interface for the first search term.

According to this implementation, the search result for the first search term is displayed in the search interface for the first search term. The search result for the first search term includes multiple synonyms in the synonym list, and a display order of the multiple synonyms is not limited, which is helpful to improve the richness and accuracy of search of application resources.

In at least one implementation, the search result for the first search term is a push sequence for at least one application resource, where a matching degree between a name of each of the at least one application resource and the first search term is greater than a preset matching degree, and where the push sequence includes resource information and a display order of the at least one application resource, and the resource information at least includes a name, a size, the number of installations, and popularity of the at least one application resource.

According to this implementation, the search result for the first search term is the push sequence for the at least one application resource. It is possible to improve the accuracy of the search result and reduce the processing delay.

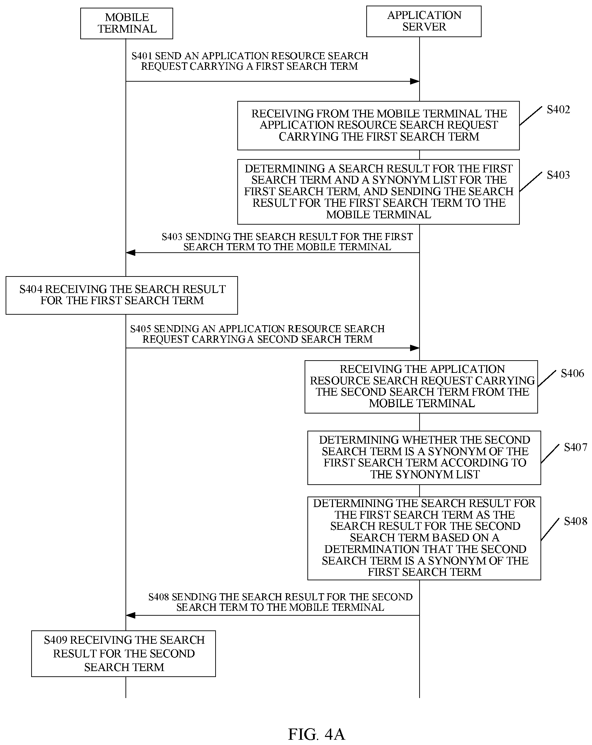

In accordance with the implementations of FIG. 2, FIG. 4A is a schematic flow chart illustrating a method for processing application resources according to other implementations. The method is applicable to a mobile terminal and an application server. The method begins at S401.

At S401, the mobile terminal sends an application resource search request carrying a first search term, where the application resource search request carrying the first search term is used for the application server to determine a search result for the first search term and a synonym list for the first search term and send the search result for the first search term to the mobile terminal.

At S402, the application server receives from the mobile terminal the application resource search request carrying the first search term.

At S403, the application server determines a search result for the first search term and a synonym list for the first search term, and sends the search result for the first search term to the mobile terminal.

At S404, the mobile terminal receives the search result for the first search term.

At S405, the mobile terminal sends an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list.

At S406, the application server receives the application resource search request carrying the second search term from the mobile terminal.

At S407, the application server determines whether the second search term is a synonym of the first search term according to the synonym list.

At S408, the application server determines the search result for the first search term as the search result for the second search term and sends the search result for the second search term to the mobile terminal, based on a determination that the second search term is a synonym of the first search term.

At S409, the mobile terminal receives the search result for the second search term.

According to this implementation, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of push of the search result for application resources.

The implementations are further described below in conjunction with specific application scenarios.

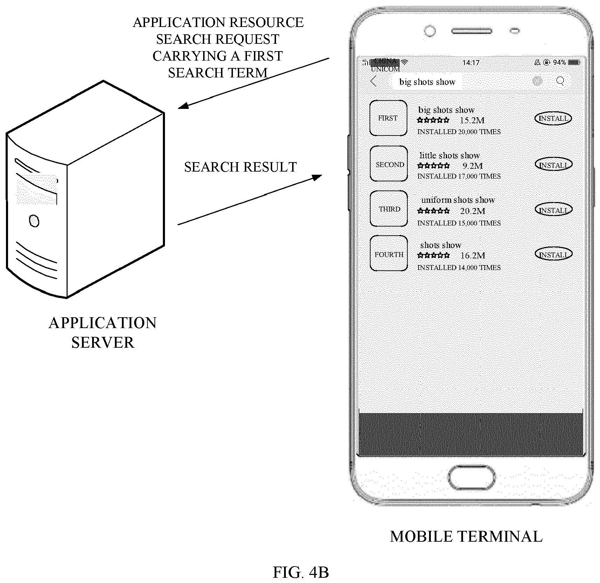

As illustrated in FIG. 4B, the application server receives an application resource search request carrying a first search term (i.e., big shots show) from the mobile terminal. The application server queries for a synonym list corresponding to big shots show by using big shots show as a query identity. The application server determines that synonyms in the synonym list include big shots show, little shots show, shots show, and uniform shots show. The application server determines the synonyms in the synonym list as a search result for big shots show and sends the search result for big shots show to the mobile terminal. After receiving the search result for big shots show, the application server displays multiple application resources corresponding to the synonyms in the synonym list on a display interface, where resource information of each application resource includes an icon, a name, popularity (indicated by star rating), a size, the number of installations, and an installation function button of each application resource, which is not limited herein.

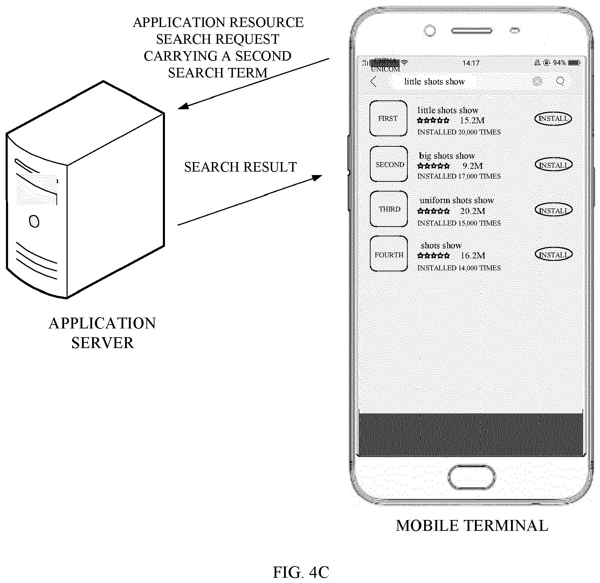

As illustrated in FIG. 4C, the application server receives an application resource search request carrying a second search term (i.e., little shots show) from the mobile terminal. The application server detects that little shots show is a synonym of big shots show. The application server then determines that a search result for little shots show is the same as the search result for big shots show, that is, a name of each application resource for the search result for little shots show is the same as that of each application resource for the search result for big shots show. After receiving the search result for little shots show, the application server displays multiple application resources corresponding to the synonyms in the synonym list on a display interface, where resource information of each application resource includes an icon, a name, popularity (indicated by star rating), a size, the number of installations, and an installation function button of each application resource, which is not limited herein.

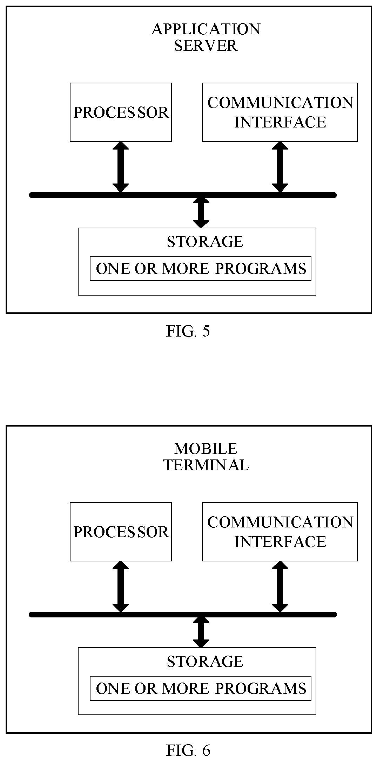

In accordance with the implementations of FIG. 2, FIG. 3, and FIG. 4A, FIG. 5 is a schematic structural diagram illustrating an application server according to implementations. The application server runs one or more applications and an operating system. As illustrated in FIG. 5, the application server includes a processor, a memory configured to store one or more programs which are different from the one or more applications, and a communication interface. The one or more programs are configured to be executed by the processor and include instructions configured to perform the following.

An application resource search request carrying a first search term is received from a mobile terminal. Determine a search result for the first search term and a synonym list for the first search term, and send the search result for the first search term to the mobile terminal. An application resource search request carrying a second search term is received from the mobile terminal. Determine whether the second search term is a synonym of the first search term according to the synonym list. Determine the search result for the first search term as a search result for the second search term and send the search result for the second search term to the mobile terminal, based on a determination that the second search term is a synonym of the first search term.

According to this implementation, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests (for example, a first search request and a second search request) from the mobile terminal, the application server can determine whether the second search term contained in the second search request and the first search term contained in the first search request are synonymous based on the synonym list of the first search term, and in the case that they are synonymous, there is no need to repeatedly perform determination of the search result for the second search term, and the search result for the first search term is determined as the search result for the second search term. As a result, delay of determining the search result can be reduced, which is conducive to improving the real-time and accuracy of push of the search result for application resources.

In at least one implementation, in terms of determining the search result for the first search term, the instructions of the one or more programs are configured to perform the following. Query for at least one application resource from an application resource library, where a matching degree between a name of each of the at least one application resource and the first search term is greater than a preset matching degree. A push sequence for the at least one application resource is generated. The push sequence is determined as the search result for the first search term.

In at least one implementation, the push sequence includes resource information and a display order of the at least one application resource, and the resource information at least includes a name, a size, the number of installations, and popularity of the at least one application resource.

In at least one implementation, in terms of determining the synonym list for the first search term, the instructions of the one or more programs are configured to perform the following. Query a pre-stored synonym library by using the first search term as a query identity, and determine a synonym list containing the first search term as the synonym list for the first search term. Alternatively, query for search terms from the pre-stored synonym library and establish the synonym list for the first search term according to the search terms, where for each of the search terms, a name thereof has *n* same words as the first search term, and *n* is greater than or equal to a preset threshold.

In at least one implementation, the instructions of the one or more programs are further configured to perform the following. Determine whether a name of a new application resource is a synonym of the first search term when the new application resource is added to an application resource library. The name of the new application resource is added to the synonym list based on a determination that the name of the new application resource is a synonym of the first search term.

In accordance with the implementations of FIG. 2, FIG. 3, and FIG. 4A, FIG. 6 is a schematic structural diagram illustrating a mobile terminal according to implementations. The mobile terminal runs one or more applications and an operating system. As illustrated in FIG. 6, the mobile terminal includes a processor, a memory configured to store one or more programs which are different from the one or more applications, and a communication interface. The one or more programs are configured to be executed by the processor and include instructions configured to perform the following.

Send an application resource search request carrying a first search term, where the application resource search request carrying the first search term is used for an application server to determine a search result for the first search term and a synonym list for the first search term and send the search result for the first search term to the mobile terminal. The search result for the first search term is received. Send an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list. The search result for the second search term is received.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of push of the search result for application resources.

In at least one implementation, the instructions of the one or more programs are further configured to perform the following. The search result for the first search term is displayed in a search interface for the first search term, after the search result for the first search term is received.

In at least one implementation, the search result for the first search term is a push sequence for at least one application resource, where a matching degree between a name of each of the at least one application resource and the first search term is greater than a preset matching degree, and where the push sequence includes resource information and a display order of the at least one application resource, and the resource information at least includes a name, a size, the number of installations, and popularity of the at least one application resource.

The foregoing solution of the implementations of the disclosure is mainly described from the viewpoint of execution process of the method. It can be understood that, in order to implement the above functions, the mobile terminal includes hardware structures and/or software modules corresponding to the respective functions. Those skilled in the art should readily recognize that, in combination with the example units and scheme steps described in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation should not be considered as beyond the scope of the present disclosure.

According to the implementations of the disclosure, functional units may be divided for the mobile terminal in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations of the present disclosure is schematic, and is merely a logical function division, and there may be other division manners in actual implementation.

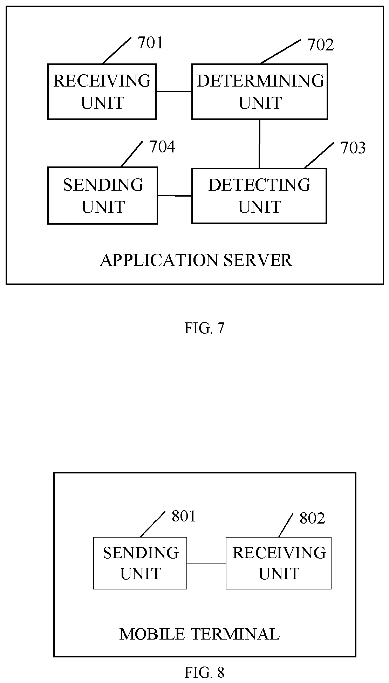

The following describes device implementations of the disclosure. The device implementations are used to execute the method implemented by the method implementations. As illustrated in FIG. 7, an application server includes a receiving unit 701, a determining unit 702, a detecting unit 703, and a sending unit 704.

The receiving unit 701 is configured to receive, from a mobile terminal, an application resource search request carrying a first search term and an application resource search request carrying a second search term. The determining unit 702 is configured to determine a search result for the first search term and a synonym list for the first search term, and send the search result for the first search term to the mobile terminal. The detecting unit 703 is configured to determine whether the second search term is a synonym of the first search term according to the synonym list. The sending unit 704 is configured to determine the search result for the first search term as a search result for the second search term and send the search result for the second search term to the mobile terminal when the second search term is a synonym of the first search term.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of push of the search result for application resources.

In at least one implementation, the determining unit 702 configured to determine the search result for the first search term is configured to: query for at least one application resource from an application resource library, where a matching degree between a name of each of the at least one application resource and the first search term is greater than a preset matching degree, generate a push sequence for the at least one application resource, and determine the push sequence as the search result for the first search term.

In at least one implementation, the push sequence includes resource information and a display order of the at least one application resource, and the resource information at least includes a name, a size, the number of installations, and popularity of the at least one application resource.

In at least one implementation, the determining unit 702 configured to determine the synonym list for the first search term is configured to: query a pre-stored synonym library by using the first search term as a query identity, and determine a synonym list containing the first search term as the synonym list for the first search term, or query for search terms from the pre-stored synonym library and establish the synonym list for the first search term according to the search terms, where for each of the search terms, the number of same words in a name of the search term and the first search term is greater than or equal to a preset threshold.

In at least one implementation, the detecting unit 703 is further configured to: determine whether a name of a new application resource is a synonym of the first search term when the new application resource is detected in an application resource library, and add the name of the new application resource to the synonym list when the name of the new application resource is a synonym of the first search term.

It is to be noted that, the mobile terminal described in the device implementation of the disclosure is presented in the form of functional units. The term "unit" used herein should be understood as the broadest meaning as possible, and an object for implementing functions defined by each "unit" may be, for example, an integrated circuit (ASIC), a single circuit, a processor (shared, dedicated, or chipset) and a memory for executing one or more software or firmware programs, a combinational logic circuit, and/or other suitable components that can achieve the above described functions.

The determining unit 702 can be a processor of the application server, the determining unit 702 and the detecting unit 703 can be processors of the application server, and the sending unit 704 can be a communication interface of the application server.

The following describes device implementations of the disclosure. The device implementations are used to execute the method implemented by the method implementations. As illustrated in FIG. 8, a mobile terminal includes a sending unit 801 and a receiving unit 802.

The sending unit 801 is configured to: send an application resource search request carrying a first search term, where the application resource search request carrying the first search term is used for an application server to determine a search result for the first search term and a synonym list for the first search term and send the search result for the first search term to the mobile terminal, and send an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list. The receiving unit 802 is configured to receive the search result for the first search term, and receive the search result for the second search term.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of the search result for push of application resources.

In at least one implementation, the mobile terminal further includes a display unit. The display unit is configured to display the search result for the first search term in a search interface for the first search term.

In at least one implementation, the search result for the first search term is a push sequence for at least one application resource, where a matching degree between a name of each of the at least one application resource and the first search term is greater than a preset matching degree, and where the push sequence includes resource information and a display order of the at least one application resource, and the resource information at least includes a name, a size, the number of installations, and popularity of the at least one application resource.

It is to be noted that, the mobile terminal described in the device implementation of the disclosure is presented in the form of functional units. The term "unit" used herein should be understood as the broadest meaning as possible, and an object for implementing functions defined by each "unit" may be, for example, an integrated circuit (ASIC), a single circuit, a processor (shared, dedicated, or chipset) and a memory for executing one or more software or firmware programs, a combinational logic circuit, and/or other suitable components that can achieve the above described functions.

The sending unit 801 and the receiving unit 802 each can be a communication interface of the mobile terminal. The display unit can be a processor or a touch display screen of the mobile terminal.

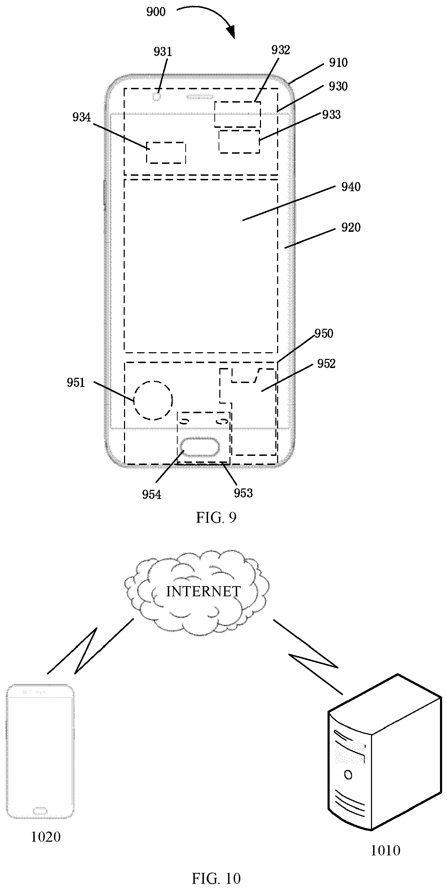

FIG. 9 is a schematic structural diagram illustrating a smart phone 900 according to implementations. The smart phone 900 includes a housing 910, a touch screen 920, a main board 930, a battery 940, and a sub-board 950. The main board 930 is provided with a front camera 931, a processor 932, a memory 933, a power management chip 934, and the like. The sub-board 950 is provided with a vibrator 951, an integrated audio cavity 952, a VOOC flash charging interface 953, and a fingerprint recognition module 954.

The smart phone runs an operating system and application resource search software and is configured to perform the following operations. An application resource search request carrying a first search term is received from a mobile terminal. A search result for the first search term and a synonym list for the first search term are determined, and the search result for the first search term is sent to the mobile terminal. An application resource search request carrying a second search term is received from the mobile terminal. Determine whether the second search term is a synonym of the first search term according to the synonym list. The search result for the first search term is determined as a search result for the second search term and the search result for the second search term is sent to the mobile terminal, based on a determination that the second search term is a synonym of the first search term.

The processor 932 is the control center of the mobile phone and is configured to connect various parts of the whole mobile phone through various interfaces and lines, run or execute software programs and/or modules stored in the memory 933, and invoke data stored in the memory 933 to perform various functions of the mobile phone and process data, thereby monitoring the mobile phone as a whole. In at least one example, the processor 932 may include one or more processing units. For example, the processor 932 may integrate an application processor and a modem processor, where the application processor is configured to handle the operating system, the user interface, the application, and so on, and the modem processor is mainly configured to process wireless communication. It will be understood that the above-mentioned modem processor may not be integrated into the processor 932. The processing unit 932 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. Various exemplary logical blocks, modules, and circuits described in conjunction with the disclosure may be achieved or implemented. The processor may also be a combination of computing functions, for example, a combination of one or more microprocessors, a combination of the DSP and the microprocessor, and the like.

The memory 933 is configured to store software programs and modules, and the processor 932 is configured to execute various function applications and data processing of the mobile phone by running the software programs and the modules stored in the memory 933. The memory 933 mainly includes a program storage area and a data storage area. The program storage area may store an operating system, application programs required for at least one function, and so on. The data storage area may store data created according to use of the mobile phone, and so on. In addition, the memory 933 may include a high-speed random access memory (RAM), and may further include a non-volatile memory such as at least one disk storage device, a flash device, or other non-volatile solid storage devices. The memory 933 can be, for example, a RAM, a flash memory, or a read only memory (ROM), an erasable programmable ROM (EPROM), electrically EPROM (EEPROM), a register, a hard disk, a mobile hard disk, a compact disc ROM (CD-ROM), or any other form of storage medium known in the art.

FIG. 10 is a system architecture diagram illustrating a system 1000 for processing application resources according to implementations. The system 1000 can include an application server 1010 and a mobile terminal 1020.

The mobile terminal 1020 is configured to send an application resource search request carrying a first search term, where the application resource search request carrying the first search term is used for an application server to determine a search result for the first search term and a synonym list for the first search term and send the search result for the first search term to the mobile terminal, to receive the search result for the first search term, to send an application resource search request carrying a second search term, where the application resource search request carrying the second search term is used for the application server to determine the search result for the first search term as a search result for the second search term and send the search result for the second search term to the mobile terminal when the second search term is determined to be a synonym of the first search term according to the synonym list, and to receive the search result for the second search term.

The application server 1010 is configured to receive, from a mobile terminal, an application resource search request carrying a first search term, to determine a search result for the first search term and a synonym list for the first search term and send the search result for the first search term to the mobile terminal, to receive, from the mobile terminal, an application resource search request carrying a second search term, to determine whether the second search term is a synonym of the first search term according to the synonym list, and to determine the search result for the first search term as a search result for the second search term and send the search result for the second search term to the mobile terminal when the second search term is a synonym of the first search term.

According to the implementations, the application server receives the application resource search request carrying the first search term from the mobile terminal. The application server determines the search result for the first search term and the synonym list for the first search term, and sends the search result for the first search term to the mobile terminal. The application server receives the application resource search request carrying the second search term from the mobile terminal. The application server determines whether the second search term is a synonym of the first search term according to the synonym list. The application server determines the search result for the first search term as the search result for the second search term and sends the search result for the second search term to the mobile terminal, based on a determination that the second search term is a synonym of the first search term. For multiple search requests from the mobile terminal, the application server can determine whether the second search term and the first search term are synonymous based on the synonym list of the first search term, and in the case that they are synonymous, there is no need to repeatedly perform determination of the search result for the second search term, and the search result for the first search term is determined as the search result for the second search term. As a result, the delay of determining the search result can be reduced, which is conducive to improving the real-time and accuracy of push of the search result for application resources.

Implementations of the present disclosure also provide a computer storage medium. The computer storage medium is configured to store computer programs for electronic data interchange. The computer programs are operable with a computer to execute part of or all the operations of any of the methods for processing application resources described in the above method implementations. The computer includes a mobile terminal.

Implementations of the present disclosure also provide a computer program product. The computer program product includes a non-transitory computer readable storage medium that stores computer programs. The computer programs are operable with a computer to execute part of or all the operations of any of the methods for processing application resources described in the above method implementations. The computer program product can be a software installation package. The computer includes a mobile terminal.

It is to be noted that, for the sake of simplicity, the foregoing method implementations are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the implementations described in the specification are exemplary implementations and the actions and modules involved are not necessarily essential to the present disclosure.

In the foregoing implementations, the description of each implementation has its own emphasis. For the parts not described in detail in one implementation, reference may be made to related descriptions in other implementations.

In the implementations of the disclosure, it is to be understood that, the apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored or skipped. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software functional unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device, and so on) to perform all or part of the steps described in the various implementations of the present disclosure. The memory includes various medium capable of storing program codes, such as a universal serial bus (USB) flash disk, a ROM, a RAM, a removable hard disk, Disk, CD, or the like.

It will be understood by those of ordinary skilled in the art that all or part of the operations of the various methods of the implementations described above may be accomplished by means of a program to instruct associated hardware, the program may be stored in a computer-readable memory, which may include a flash memory, a ROM, a RAM, Disk or CD, and so on.

While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for processing application resources, applicable to an application server configured to push the application resources to a mobile terminal, the method comprising:
receiving, from the mobile terminal, an application resource search request carrying a first search term;
determining a search result for the first search term and a synonym list for the first search term, and sending the search result for the first search term to the mobile terminal;
receiving, from the mobile terminal, an application resource search request carrying a second search term;
determining whether the second search term is a synonym of the first search term according to the synonym list; and
determining the search result for the first search term as a search result for the second search term and sending the search result for the second search term to the mobile terminal, based on a determination that the second search term is a synonym of the first search term.

2. The method of claim 1, wherein determining the search result for the first search term comprises:
querying for at least one application resource from an application resource library, wherein a matching degree between a name of each of the at least one application resource and the first search term is greater than a preset matching degree;
generating a push sequence for the at least one application resource; and
determining the push sequence as the search result for the first search term.

3. The method of claim 2, wherein the push sequence comprises resource information and a display order of the at least one application resource, and the resource information at least comprises a name, a size, the number of installations, and popularity of the at least one application resource.

4. The method of any of claims 1-3, wherein determining the synonym list for the first search term comprises one of:
querying a pre-stored synonym library by using the first search term as a query identity, and determining a synonym list containing the first search term as the synonym list for the first search term; or
querying for search terms from the pre-stored synonym library and establishing the synonym list for the first search term according to the search terms, wherein for each of the search terms, a name thereof has *n* same words as the first search term, wherein *n* is greater than or equal to a preset threshold.

5. The method of any of claims 1-4, further comprising:
determining whether a name of a new application resource is a synonym of the first search term when the new application resource is added to an application resource library; and
adding the name of the new application resource to the synonym list based on a determination that the name of the new application resource is a synonym of the first search term.

6. A method for processing application resources, applicable to a mobile terminal, the method comprising:
sending an application resource search request carrying a first search term, wherein the application resource search request carrying the first search term is used for an application server to determine a search result for the first search term and a synonym list for the first search term and send the search result for the first search term to the mobile terminal;
receiving the search result for the first search term;
sending an application resource search request carrying a second search term, wherein the application resource search request carrying the second search term is used for the application server to determine the search result for the first search term as a search result for the second search term and send the search result for the second search term to the mobile terminal when the second search term is determined to be a synonym of the first search term according to the synonym list; and
receiving the search result for the second search term.

7. The method of claim 6, further comprising:
after receiving the search result for the first search term,
displaying the search result for the first search term in a search interface for the first search term.

8. The method of claim 7, wherein the search result for the first search term is a push sequence for at least one application resource, wherein a matching degree between a name of each of the at least one application resource and the first search term is greater than a preset matching degree, and wherein the push sequence comprises resource information and a display order of the at least one application resource, and the resource information at least comprises a name, a size, the number of installations, and popularity of the at least one application resource.

9. An application server, comprising:
a receiving unit configured to receive, from a mobile terminal, an application resource search request carrying a first search term and an application resource search request carrying a second search term;
a determining unit configured to determine a search result for the first search term and a synonym list for the first search term, and send the search result for the first search term to the mobile terminal;
a detecting unit configured to determine whether the second search term is a synonym of the first search term according to the synonym list; and
a sending unit configured to determine the search result for the first search term as a search result for the second search term and send the search result for the second search term to the mobile terminal when the second search term is a synonym of the first search term.

10. The application server of claim 9, wherein the determining unit configured to determine the search result for the first search term is configured to:
query for at least one application resource from an application resource library, wherein a matching degree between a name of each of the at least one application resource and the first search term is greater than a preset matching degree;
generate a push sequence for the at least one application resource; and
determine the push sequence as the search result for the first search term.

11. The application server of claim 10, wherein the push sequence comprises resource information and a display order of the at least one application resource, and the resource information at least comprises a name, a size, the number of installations, and popularity of the at least one application resource.

12. The application server of any of claims 9-11, wherein the determining unit configured to determine the synonym list for the first search term is configured to:
query a pre-stored synonym library by using the first search term as a query identity, and determine a synonym list containing the first search term as the synonym list for the first search term; or
query for search terms from the pre-stored synonym library and establish the synonym list for the first search term according to the search terms, wherein for each of the search terms, a name thereof has *n* same words as the first search term, wherein *n* is greater than or equal to a preset threshold.

13. The application server of any of claims 9-12, wherein the detecting unit is further configured to:
determine whether a name of a new application resource is a synonym of the first search term when the new application resource is added to an application resource library; and
add the name of the new application resource to the synonym list when the name of the new application resource is a synonym of the first search term.

14. A mobile terminal, comprising:
a sending unit configured to:
send an application resource search request carrying a first search term, wherein the application resource search request carrying the first search term is used for an application server to determine a search result for the first search term and a synonym list for the first search term and send the search result for the first search term to the mobile terminal; and
send an application resource search request carrying a second search term, wherein the application resource search request carrying the second search term is used for the application server to determine the search result for the first search term as a search result for the second search term and send the search result for the second search term to the mobile terminal when the second search term is determined to be a synonym of the first search term according to the synonym list; and
a receiving unit configured to
receive the search result for the first search term; and
receive the search result for the second search term.

15. The mobile terminal of claim 14, further comprising a display unit configured to display the search result for the first search term in a search interface for the first search term.

16. The mobile terminal of claim 15, wherein the search result for the first search term is a push sequence for at least one application resource, wherein a matching degree between a name of each of the at least one application resource and the first search term is greater than a preset matching degree, and wherein the push sequence comprises resource information and a display order of the at least one application resource, and the resource information at least comprises a name, a size, the number of installations, and popularity of the at least one application resource.

17. A system for processing application resources comprising the application server of any of claims 9-13 and the mobile terminal of any of claims 14-16.

18. An application server comprising a processor and a memory configured to store one or more programs, wherein the one or more programs are configured to be executed by the processor and comprise instructions configured to perform the method of any of claims 1-5.

19. A mobile terminal comprising a processor, a memory configured to store one or more programs, and a communication interface, wherein the one or more programs are configured to be executed by the processor and comprise instructions configured to perform the method of any of claims 6-8.

20. A computer readable storage medium configured to store computer programs for electronic data interchange, wherein the computer programs are operable with a computer to perform the method of any of claims 1-5 and/or the method of any of claims 6-8.
